# EUROPEAN PATENT APPLICATION

(11) **EP 4 310 140 A1**
(43) Date of publication of application: **24.01.2024**
(21) Application number: 23186792.0
(22) Date of filing: 20.07.2023
(51) Int. Cl.: C08L 15/00, B60C 1/00, C08L 9/00, C08K 5/103

(54) **TIRE COMPONENT WITH A MAJORITY RENEWABLE CONTENT**

(30) Priority: 22.07.2022 US 202263369114 P
(71) Applicant: The Goodyear Tire & Rubber Company, Akron, OH 44316 (US)
(72) Inventor: DEAN-SIOSS, Stacey Lynne, Broadview Heights, 44147 (US); KRUTH, Alexis Anne, Cuyahoga Falls (US)
(74) Representative: Kutsch, Bernd

(57) **Abstract**

A tire component formed from or comprising a rubber composition comprising a majority weight percent of renewable materials is disclosed. The rubber composition comprises, based on 100 parts per weight (phr) of elastomer: a blend of at least two different rubber elastomers, greater than 50 phr of at least one of said least two rubber elastomers being a mass balanced polymer; at least one bio-derived plasticizer; and a bio-derived filler system comprising silica and carbon black, wherein said carbon black filler is at least partially derived from a bio-based feedstock prior to its addition to the rubber composition.

## Description

### Field of the Invention

The present exemplary embodiments relate to a tire rubber composition containing a majority weight percent of renewable content. It finds particular application in conjunction with tire components, preferably tires treads or tire tread components components, and will be described with particular reference thereto. However, it is to be appreciated that the present exemplary embodiments are also amenable to other like applications.

### Background of the Invention

To improve sustainability in the tire industry, there is an ongoing effort to develop rubber tire compositions from renewable sources. However, sustainable compositions must behave in predicted ways for a tire to perform to its intended purpose. Therefore, a sustainable rubber composition is desired from which there is little to no compromise in rubber performance.

In rubber tire compounds, each material and additive are combined with elastomers to impart specific properties in the resulting tire. Presently, several materials - particularly plasticizing oil and resins-are derived from a fossil (also referred to herein as "hydrocarbon") fuel source (i.e., petroleum, coal, or natural gas). Emissions from the manufacture of these petroleum-derived materials include organics, sulfur compounds, carbon monoxide (CO), and other contaminants. To lessen the environmental impact of such emissions, there is a desire to reduce, or altogether exclude, from rubber compounds the materials that originate from fossil fuel sources. However, previous technologies have made it difficult for one, let alone a combination of, bio-derived alternative materials to replicate the performance of conventional materials in tire compounds.

To meet the challenge of providing a tire rubber composition delivering a competitive performance from sustainable, bio-renewable, environmentally friendly, and non-fossil fuel sources, it is desired to evaluate a rubber composition formed from a combination of materials including plasticizers and fillers derived from a renewable resource.

### Summary of the Invention

The invention relates to a tire component in accordance with claim 1.

Dependent claims refer to preferred embodiments of the invention.

One embodiment of the disclosure relates to a tire component formed from a rubber composition comprising a majority weight percent of renewable materials. The rubber composition comprises, based on 100 parts per weight (phr) of elastomer: a blend of at least two rubber elastomers comprising or consisting of: greater than 50 phr of at least one mass balanced polymer; at least one bio-derived plasticizer; and a bio-derived filler system comprising silica and carbon black. In the contemplated embodiment, the carbon black filler is at least partially derived from a bio-based feedstock prior to its addition to the rubber composition.

### Detailed Description of Preferred Embodiments of the Invention

The present disclosure relates to a rubber composition containing a majority weight percent of renewable content. The disclosure further relates to a tire component comprising the compound.

As used herein, the terms "compounded rubber", "rubber compound" and "compound" refer to rubber compositions containing elastomers which have been compounded, or blended, with appropriate rubber compounding ingredients. The terms "rubber" and "elastomer" and "polymer" may be used interchangeably unless otherwise indicated. It is believed that such terms are well known to those having skill in the art.

As used herein, except where context requires otherwise, the term "comprise" and variations of the term, such as "comprising", "comprises" and "comprised", are not intended to exclude further additives, components, integers, or steps. As used herein, the words "from about" means approximately and can includes values ±1 beyond the ones listed herein.

As used herein, the term "bio-based" or "bio-derived" refers to a circular material or a material derived from a renewable or sustainable resource or natural source, and may even include an industrial source when, for example, a byproduct or waste product is being captured and reused to reduce or eliminate emissions and/or landfill waste that is harmful to the environment. One example is the sequestration of carbon oxides for use as feedstock.

As used herein, "renewable" and "sustainable" are used interchangeably and hereafter comprises recycled material as well; "content" and "material" are used interchangeably. It partially, and more preferably fully, excludes radiocarbon and fossil carbon materials derived from petroleum, coal, or a natural gas source. Examples of resources from which the bio-based material can be derived include, but are not limited to, fresh (or from the fermentation of biomass material, such as corn, vegetable oils, etc.

As used herein "mass balanced" means that at least a portion of the feedstock used to synthesize a polymer is circular or bio-based.

In practice, the polymer may be certified as mass-balance renewable. In the contemplated embodiment, at least 0.1%, and more preferably at least 1%, and most preferably at least 5%, of the feedstock to produce the polymer is circular or bio-based.

A key aspect of the disclosure is the percent weight content of renewable content achieved using a combination of various renewable materials. A further aspect of the disclosed rubber composition is that the performance of a cured rubber composition with a majority weight percent of renewable content matches or improves on the tread (snow, wet, wear, and rolling resistance) performance of conventional rubber compositions made from petroleum-derived materials.

### Rubber Polymer(s)

The disclosed rubber composition comprises a blend of at least two rubbers, and more particularly, conjugated diene-based elastomers. In practice, various conjugated diene-based elastomers may be used for the rubber composition such as, for example, polymers and copolymers of at least one of isoprene and 1,3-butadiene and of styrene copolymerized with at least one of isoprene and 1,3-butadiene. Representative of such conjugated diene-based elastomers are, for example, at least one of cis 1,4-polyisoprene (natural and synthetic), cis 1,4-polybutadiene, styrene/butadiene copolymers (SBR), medium vinyl polybutadiene having a vinyl 1,2-content in a range of 15 to 90 percent, isoprene/butadiene copolymers, and styrene/isoprene/butadiene terpolymers.

In practice, the preferred rubber or elastomers are polybutadiene and/or SBR. In one embodiment, the rubber composition may optionally comprise a polyisoprene (natural or synthetic) as well.

The rubber elastomers are preferably all certified as mass balanced polymers.

Examples of mass balanced elastomers can include SBR and polybutadiene in which circular or renewable feedstock are employed to synthesize the polymers.

Preferably, at least two different mass balanced polymers are used.

In one embodiment, the polybutadiene is present in a majority amount. In another embodiment, the polyisoprene is present in a majority amount. In the preferred embodiment, the SBR is present in the majority amount.

In one contemplated embodiment, at least one rubber polymer is a styrene-butadiene rubber. Styrene/butadiene copolymers include those prepared by aqueous emulsion polymerization (ESBR) and organic solvent solution polymerization (SSBR). In the contemplated embodiment, a solution polymerization prepared SBR (SSBR) is also contemplated, which typically has a bound styrene content in a range of 9 to 36 percent. However, embodiments are contemplated in which the SSBR has a bound styrene content of less than 30 percent.

The rubber composition can comprise up to 85 and, more preferably 80, and most preferably 75 phr of the mass balanced styrene-butadiene rubber. In one embodiment, the rubber composition comprises SSBR and excludes ESBR. For embodiments in which the blend of rubber polymers comprises SSBR, the SSBR may be present in an amount of from 50 phr to 85 phr and, more preferably, from 55 to 80 phr and, most preferably from 60 to 75 phr. In certain embodiments, the rubber composition comprises up to 40% weight percent of SSBR.

The SSBR can be conveniently prepared, for example, by organo lithium catalyzation in the presence of an organic hydrocarbon solvent. In one embodiment, the SSBR is not functionalized. In the preferred embodiment, at least one rubber polymer, most preferably the SSBR, can be functionalized.

Representative of functionalized elastomers are, for example, styrene/butadiene elastomers containing one or more functional groups comprising:
(A) amine functional group reactive with hydroxyl groups on precipitated silica,
(B) siloxy functional group, including end chain siloxy groups, reactive with hydroxyl groups on precipitated silica,
(C) combination of amine and siloxy functional groups reactive with hydroxyl groups on said precipitated silica,
(D) combination of thiol and siloxy (e.g., ethoxysilane) functional groups reactive with hydroxyl groups on the precipitated silica,
(E) combination of imine and siloxy functional groups reactive with hydroxyl groups on the precipitated silica,
(F) hydroxyl functional groups reactive with the precipitated silica.

For the functionalized elastomers, representatives of amine functionalized SBR elastomers are, for example, in-chain functionalized SBR elastomers mentioned in U.S. Pat. No. 6,936,669.

Representative of a combination of amino-siloxy functionalized SBR elastomers with one or more amino-siloxy groups connected to the elastomer is, for example, HPR355^{™} from JSR and amino-siloxy functionalized SBR elastomers mentioned in U.S. Pat. No. 7,981,966.

Representative styrene/butadiene elastomers end functionalized with a silanesulfide group are, for example, mentioned in U.S. Pat. Nos. 8,217,103 and 8,569,409.

In practice, a second rubber polymer can include polybutadiene, preferably in a minor portion. In one embodiment, the rubber composition comprises from 1 phr to 50 phr of at least one polybutadiene and, more preferably, from 20 phr to 40 phr of polybutadiene(s). In the contemplated embodiment, at least two different polybutadienes can be used. By "different', the disclosure contemplates different structures. For example, one of the polybutadienes can be branched while the other is not. In practice, where more than one polybutadiene is employed, preferably no one polybutadiene is present at greater than 25 phr. In one embodiment, the rubber composition comprises up to 20% weight percent of polybutadiene.

In practice, it is envisioned that the cis 1,4-polybutadiene elastomer(s) may be a prepared cis 1,4-polybutadiene rubber which may be prepared, for example, by polymerization of 1,3-polybutadiene monomer in an organic solvent solution in the presence of a catalyst system comprising a nickel compound. However, such 1,4-polybutadiene(s) can be prepared by organic solution lanthanide catalysis of cis 1,3-budadiene rubber instead.

In a preferred embodiment, the polybutadienes can be characterized by similar glass transition temperatures.

In a preferred embodiment, the polybutadiene(s) has a glass transition temperature below -100°C.

In a preferred embodiment, the polybutadiene(s) may be characterized by a cis content greater than 92% and, more preferably, 95%.

Representative of such nickel catalyst prepared cis 1,4-polybutdiene is, for example, BUD 1207^{™}, BUD 1208^{™} or BUD 4001^{™} , and/or, BUD 1280^{™} obtained from The Goodyear Tire & Rubber Company or BR 1208^{™} and/or BR 1280^{™} obtained from LG Chem.

Optionally, a natural rubber or synthetic polyisoprene can also be employed in the polymer blend.

It is further contemplated that, in certain embodiments, the rubber elastomer may be a butyl type rubber, particularly copolymers of isobutylene with a minor content of diene hydrocarbon(s), such as, for example, isoprene and halogenated butyl rubber.

It is further contemplated that, in certain embodiments, the elastomer may comprise a halobutyl rubber comprising a blend consisting of chlorobutyl rubber, bromobutyl rubber and mixtures thereof.

### Oil

By desiring the rubber composition to contain fewer to no materials derived from petroleum, it is meant that the rubber composition will contain minimal, if any, petroleum-based plasticizers, including processing oil. For example, it is desired that the rubber composition be limited to less than 5 phr of petroleum-based processing oil and, more preferably, less than 2 phr of rubber petroleum-based processing oil.

In one embodiment, the rubber composition may comprise up to 30 phr of rubber processing oil. In another embodiment, the rubber composition may comprise no less than 1 phr of rubber processing oil. In practice, the composition may comprise from 10 to 20 phr of rubber processing oil and, more preferably, from 10 to 20 phr of bio-based rubber processing oil.

Processing oil may be included in the rubber composition as extending oil typically used to extend elastomers. Processing oil may also be included in the rubber composition by addition of the oil directly during rubber compounding. The processing oil used in the rubber composition may include both extending oil present in the elastomers and process oil added during compounding. Suitable process oils include various oils as are known in the art, including aromatic, paraffinic, naphthenic, vegetable triglyceride oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

A suitable bio-based oil is a vegetable triglyceride oil comprised of a combination of saturated and unsaturated esters where the unsaturated esters are comprised of a combination of at least one of oleic acid ester, linoleate acid ester and linoleate acid ester. The saturated esters may comprise, for example, at least one of stearic acid ester and palmitic acid ester.

In a preferred embodiment, the vegetable triglyceride oil comprises at least one of soybean oil, sunflower oil, rapeseed oil, and canola oil, which are in the form of esters containing a certain degree of unsaturation. Other suitable examples of vegetable triglyceride oil include corn, coconut, cottonseed, olive, palm, peanut, and safflower oils. In practice, the oil includes at least one of soybean oil and sunflower oil.

In the case of soybean oil, for example, the above represented percent distribution, or combination, of the fatty acids for the glycerol tri-esters, namely the triglycerides, is represented as being an average value and may vary somewhat depending primarily on the type, or source of the soybean crop, and may also depend on the growing conditions of a particular soybean crop from which the soybean oil was obtained. There are also significant amounts of other saturated fatty acids typically present, though these usually do not exceed 20 percent of the soybean oil.

The contemplated embodiment comprises between 1% and 10% weight percent of a bio-derived rubber processing oil in the composition. In one embodiment, the rubber processing oil material makes up from 1% weight percent and 15% weight percent of the composition.

### Resin

A critical aspect of the present disclosure is the use of a bio-derived resin material as optionally part of a plasticizing package or system. The bio-derived resin material can be used as a partial replacement of a petroleum plasticizing oil, but more preferably in addition to a bio-derived plasticizing oil.

Conventional resins are derived from petroleum. These types of resins include any hydrocarbon chemistry type resin (AMS, coumarone-indene, C5, C9, C5/C9, DCPD, DCPD/C9, others) & any modification thereof (phenol, C9, hydrogenation, recycled monomers, others) While these types of resins are contemplated for use in one embodiment of the invention, the preferred embodiment instead employs a renewable biobased chemistry type resin & modification and mixture thereof. Representative resins can also include coumarone type resins, including coumarone-indene resins and mixtures of coumarone resins, naphthenic oils, phenol resins, and rosins. Other suitable resins include phenol-terpene resins such as phenol-acetylene resins, phenol-formaldehyde resins, alkyl phenol-formaldehyde resins, terpene-phenol resins, polyterpene resins, and xylene-formaldehyde resins.

Terpene-phenol resins may be used. Terpene-phenol resins may be derived by copolymerization of phenolic monomers with terpenes such as limonenes, pinenes and delta-3-carene. In one embodiment, the resin can be an alpha pinene resin characterized by a softening point between 70° C and 160° C.

In one embodiment, the resin is a resin derived from rosin and derivatives. Representative thereof are, for example, gum rosin, wood rosin and tall oil rosin. Gum rosin, wood rosin and tall oil rosin have similar compositions, although the number of components of the rosins may vary. Such resins may be dimerized, polymerized or disproportionated. Such resins may be in the form of esters of rosin acids and polyols such as pentaerythritol or glycol. In one embodiment, the resin can be a gum rosin characterized by a softening point between 70° C and 160° C.

In one embodiment, said resin may be partially or fully hydrogenated.

In one embodiment, the rubber composition comprises from 1 to 50 phr of at least one resin and, more preferably, at least 1 phr of a bio-derived plasticizing resin, although embodiments are contemplated in which another resin of a different type can be added to the composition as well. In one embodiment, the rubber composition comprises no less than 1 phr of resin and, more preferably, no less than 2 phr of resin. In one embodiment, the rubber composition comprises no more than 50 phr of resin and in certain embodiments, no more than 40 phr of resin.

The contemplated embodiment comprises less than 15% weight percent of resin material in the composition.

### Filler

The disclosed rubber composition preferably comprises from 25 phr to 100 phr of silica filler. In one embodiment, the composition comprises at least 50 phr of silica. In one embodiment, the composition comprises no less than 80 phr of silica.

In one embodiment, the silica comprises:
(A) a silica or precipitated silica derived from inorganic sand (silicon dioxide based sand), or
(B) a silica or precipitated silica derived from rice husks (silicon dioxide containing rice husks), or
(C) a combination of both.

In one embodiment the silica is derived from naturally occurring inorganic sand (e.g. SiO₂, silicon dioxide, which may contain a trace mineral content). The inorganic sand is typically treated with a strong base such as, for example, sodium hydroxide, to form an aqueous silicate solution (e.g., sodium silicate). A synthetic precipitated silica is formed therefrom by controlled treatment of the silicate with an acid (e.g. a mineral acid and/or acidifying gas such as, for example, carbon dioxide). Sometimes an electrolyte (e.g. sodium sulfate) may be present to promote formation of precipitated silica particles. The recovered precipitated silica is an amorphous precipitated silica.

In a preferred embodiment, the silica is a rice husk derived precipitated silica. Such precipitated silica is from derived rice plant husks (e.g., burnt ashes from rice husks) which contain SiO₂, silicon dioxide, and which may contain trace minerals from the soil in which the rice has been planted). In a similar methodology, the rice husks (e.g. rice husk ash) is typically treated with a strong base such as, for example, sodium hydroxide, to form an aqueous silicate solution (e.g. sodium silicate) following which a synthetic precipitated silica is formed therefrom by controlled treatment of the silicate with an acid (e.g., a mineral acid and/or acidifying gas such as, for example, carbon dioxide) in which an electrolyte (e.g. sodium sulfate) may be present to promote formation of precipitated silica particles derived from rice husks. The recovered precipitated silica is an amorphous precipitated silica. For Example, see U.S. Patent Application Serial No. 2003/0096900. In practice, the rubber composition comprises between 25 and 100 weight percent of rice husk ash silica and, more preferably, between 50 and 80 weight percent of rice husk ash silica.

The precipitated silica, whether derived from the aforesaid silicon dioxide or rice husks, may, for example, have a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such precipitated silicas may, for example, also have a dibutyl phthalate (DBP) absorption value, for example, in a range of 100 to 400, and more usually 150 to 300 cc/100 g.

Other embodiments are contemplated in which the silica is used in combination with another filler, such as carbon black.

In one embodiment, the rubber composition optionally comprises, based on 100 parts by weight (phr) of elastomer, from 1 to 20 phr of carbon black. In one embodiment, the rubber composition comprises no more than 20 phr of carbon black. In another embodiment, the rubber composition comprises no less than 1 phr of carbon black and, in certain embodiments, no less than 5 phr of carbon black. In one embodiment, the rubber composition comprises from 5 to 15 phr of carbon black. In a preferred embodiment, the carbon black is a bio-based carbon black.

The ASTM-D6866 method to derive "bio-based" content is built on the same concepts as radiocarbon dating, but without use of the age equations. The method relies on determining a ratio of the amount of radiocarbon (¹⁴C) in an unknown sample to that of a modern reference standard. The ratio is reported as a percentage with the units "pMC" (percent modern carbon). If the material being analyzed is a mixture of present-day radiocarbon and fossil carbon (fossil carbon being derived from petroleum, coal or a natural gas source), then the obtained pMC value correlates directly to the amount of biomass material present in the sample.

The modern reference standard used in radiocarbon dating is a National Institute of Standards and Technology USA (NIST-USA) standard with a known radiocarbon content equivalent approximately to the year AD 1950, before excess radiocarbon was introduced into the atmosphere. AD 1950 represents zero (0) years old and 100 pMC. Present day (fresh) biomass materials, and materials derived therefrom, give a radiocarbon signature near 107.5.

The radiocarbon dating isotope (¹⁴C) has a nuclear half-life of 5730 years. Fossil carbon, depending upon its source, has very close to zero ¹⁴C content. By presuming that 107.5 pMC represents present day biomass materials and 0 pMC represents petroleum (fossil carbon) derivatives, the measured pMC value for a material will reflect the proportions of the two component types. Thus, a material derived 100% from present day vegetable oil would give a radiocarbon signature near 107.5 pMC. If that material was diluted with 50% petroleum derivatives, it would give a radiocarbon signature near 54 pMC.

A biomass content result is derived by assigning 100% equal to 107.5 pMC and 0% equal to 0 pMC. In this regard, a sample measuring 99 pMC will give an equivalent bio-based content result of 93%. This value is referred to as the "mean biobased result" and assumes all the components within the analyzed material were either present day living or fossil in origin.

The results provided by the ASTM D6866 method are the mean biobased result and encompass an absolute range of 6% (±3% on either side of the mean bio-based result) to account for variations in end-component radiocarbon signatures. It is presumed that all materials are present day or fossil in origin. The result is the amount of bio-based component "present" in the material-not the amount of bio-based material "used" in the manufacturing process.

In one embodiment, a tire component is formed from a rubber composition comprising a carbon black filler having a greater than one percent (1 %) modern carbon content as defined by ASTM D6866. The carbon black is produced from a bio-based feedstock prior to its addition to the rubber composition. In one embodiment, the carbon black is at least partially derived from a bio-based feedstock and, in a preferred embodiment, is completely devoid of fossil carbon.

In one embodiment, the bio-based feedstock, from which the carbon black is derived, comprises at least one triglyceride vegetable oil, such as, for example, soybean oil, sunflower oil, canola oil, rapeseed oil, or combinations thereof. In one embodiment, the bio-based feedstock, from which the carbon black is derived, comprises at least one plant biomass, animal biomass and municipal waste biomass, or combinations thereof.

In one embodiment, the carbon black has at least 1% modern carbon content. In one embodiment, the carbon black has at least 10% and, more preferably, at least 25% and, most preferably, at least 50% modern carbon content. In one embodiment, the carbon black has a biomass content result of at least 1 pMC and, more preferably, at least 54 pMC. In one embodiment, the carbon black may have a biomass content result of at least 80 pMC.

Other embodiments are contemplated that employ a carbon-dioxide generated carbon reinforcing filler. Suitable carbon dioxide-generated carbon reinforcement may be produced using methods as described in US 8,679,444; US 10,500,582; and U.S. Ser. No. 17/109,262.

Various combinations of carbon blacks (of differing particle sizes and/or other properties, including conventional, petroleum-carbon black) can also be employed in the disclosed rubber composition. Representative examples of rubber reinforcing carbon blacks are, for example, referenced in The Vanderbilt Rubber Handbook, 13th edition, 1990, on Pages 417 and 418 with their ASTM designations. Such rubber reinforcing carbon blacks may have iodine absorptions ranging from, for example, 60 to 240 g/kg and DBP values ranging from 34 to 150 cc/100 g.

### Coupling Agent

Representative of silica coupler for use with the silica are:
(A) bis(3-trialkoxysilylalkyl) polysulfide containing an average in range of from 2 to 4, alternatively from 2 to 2.6 or from 3.2 to 3.8, sulfur atoms in its connecting bridge, or
(B) an alkoxyorganomercaptosilane, or
(C) their combination.

Representative of such bis(3-trialkoxysilylalkyl) polysulfide comprises bis(3-triethoxysilylpropyl) polysulfide.

The silica, discussed *supra*, is desirably added to the rubber composition in combination with the bis(3-triethoxysilylpropyl) polysulfide for reaction thereof in situ within the rubber composition.

In one embodiment, the composition comprises between 1 phr and 20 phr of coupling agent and, more preferably, between from 5 phr and 10 phr of coupling agent.

In a preferred embodiment, the coupling agent is a bio-based coupling agent or a bio-based silane coupling agent.

### Processing Aid-Fatty Acid Derivatives

Another aspect of the present disclosure is the addition of a bio-derived processing aid for the rubber composition. In a preferred embodiment, the processing aid can be a blend of bio-based fatty acid derivatives and/or bio-based fatty acid derivative(s). The processing aid can have a softening point (Tg) in the range of from 105° C to 120° C. Generally, from 0.5 to 5 phr and, more preferably, from 1 to 3 phr of processing aid may be comprised in the composition. In a contemplated embodiment, the processing aid be obtained as ZB 49 from Struktol^{®} or others. In some embodiments, the processing aid can be used to promote coupling between a coupling agent, silica filler and/or moieties on the polymer to the network between the polymers.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators, accelerators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts.

Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 0.5 to 5 phr. Representative antioxidants may be, for example, polymerized trimethyl dihydroquinoline, mixture of aryl-p-phenylene diamines, and others, such as, for example, those disclosed in The Vanderbilt Rubber Handbook (1978), pages 344 through 346. In the preferred embodiment, the antioxidant is a lignin-based antioxidant. Typical amounts of antiozonants comprise 1 to 5 phr. A non-limiting representative antiozonant can be, for example, N-(1,3 dimethyl butyl)-n'-phenyl-p-phenylenediamine. Typical amounts of fatty acids, if used, which can include stearic acid as an example, can comprise 0.5 to 5 phr. Typical amounts of zinc oxide comprise 1 to 5 phr. In a preferred embodiment, the zinc oxide is derived from recycled content. Typical amounts of waxes comprise 1 to 5 phr. Often microcrystalline waxes are used, but refined paraffin waxes or combinations of both can be used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.2 to 3, preferably 1 to 2.5 phr. In another embodiment, combinations of a primary and a secondary accelerator might be used with the secondary accelerator being used in total amounts ranging from 0.2 to 3, preferably 1 to 2.5 phr., in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. A nonlimiting example of a retarder can be N-cyclohexylthiophthalimide (CTP). Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide, such as, for example, N-cyclohexyl-2-benzothiazolesulfenamide (CBS). If a second accelerator is used, the secondary accelerator is preferably a guanidine (such as diphenyl guanidine (DPG)), dithiocarbamate (such as zinc dimethyl di-thiocarbamate or zinc dibenzyl dithiocarbamate) or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of a pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The disclosure contemplates a tire component formed from such method. Similarly, the tire component may be incorporated in a tire. The tire component can be ground contacting or non-ground contacting. The tire can be pneumatic or nonpneumatic. In one embodiment, the tire component is a tread.

The tire of the present disclosure may be a race tire, passenger tire, aircraft tire, agricultural, earthmover, off-the-road, or truck (commercial or passenger) tire. Preferably, the tire is a passenger or truck tire. The tire may also be a radial or bias, with a radial being preferred.

The rubber composition itself, depending largely upon the selection and levels of renewable materials, may also be useful as a tire sidewall or other tire components or in rubber tracks, conveyor belts or other industrial product applications, such as windshield wiper blades, brake diaphragms, washers, seals, gaskets, hoses, conveyor belts, power transmission belts, shoe soles, shoe foxing and floor mats for buildings or automotive applications.

The following examples are presented for the purposes of illustrating the present invention. All parts are parts by weight unless specifically identified otherwise.

### Examples

In these examples, the effects of the disclosed combinations of renewable content on the performance of a rubber compound are illustrated. Rubber compositions were mixed in a multi-step mixing procedure following the recipes in Tables 1-3.

### EXAMPLE 1

Experimental Samples B and C are shown in Table 1. In Samples B and C, the petroleum-based naphthenic oil is replaced with a bio-derived vegetable triglyceride oil - more particularly, soybean oil. The cure package (not shown) was also increased to adjust for unsaturation of the soybean oil. Sample C also contains a twenty-five percent (25%) increase in silane coupler over Control A to further adjust for the changes, with all other ingredients and amounts being the same.

The rubber compounds were then cured and tested for various properties including, inter alia, wear, wet traction, and rolling resistance, etc.

The basic formulations are shown in the following Table 1, which is presented in parts per 100 parts by weight of elastomer (phr). Table 1 also compares the cured properties of Control Sample A and Experimental Samples B and C.

**TABLE 1**

| | **Samples Control** | **Experimental** | |
|---|---|---|---|
| | **A** | **B** | **C** |
| BR¹ | 15 | 15 | 15 |
| BR² | 15 | 15 | 15 |
| SSBR³ | 70 | 70 | 70 |
| Naphthenic Oil | 17 | 0 | 0 |
| Soybean Oil | 0 | 17 | 17 |
| Silica | 65 | 65 | 65 |
| Carbon Black | 4.16 | 4.16 | 4.16 |
| Coupler⁴ | 5.2 | 5.2 | |

| **Viscosity,** RPA at 0.83 Hz, 100°C | | | |
|---|---|---|---|
| G', 15% (MPa) | 0.208 | 0.208 | 0.192 |

| **Cure State** | | | |
|---|---|---|---|
| Delta Torque (dNm) | 18.4 | 19.1 | 17.9 |
| T25 (min) | 9.2 | 8.1 | 5.9 |
| T90 (min) | 21.0 | 17.5 | 14.6 |

| **Stiffness** | | | |
|---|---|---|---|
| RPA G', 1% (MPa) | 2.487 | 2.571 | 2.390 |
| RPA G' 50% (MPa) | 1.148 | 1.195 | 1.112 |
| ARES at 30°C, G' (Pa) | 2.62E±06 | 2.68E±06 | 2.66E±06 |

| **Chip/Flake** | | | |
|---|---|---|---|
| True Tensile | 109 | 106 | 115 |

| **Wet Indicator** | | | |
|---|---|---|---|
| Rebound at 0°C (%) | 23.2 | 24.0 | 25.3 |

| | **Samples Control** | **Experimental** | |
|---|---|---|---|
| | **A** | **B** | **C** |
| ARES TD at 0°C | 0.336 | 0.322 | 0.291 |

| **Wear Indicators** | | | |
|---|---|---|---|
| DIN Abrasion (relative volume loss) | 93 | 91 | 77 |
| Grosch Abrasion High Severity (mg/km) | 619 | 594 | 552 |

| **Snow Indicator** | | | |
|---|---|---|---|
| ARES G' at -20°C (Pa) | 9.64E±06 | 8.73E±06 | 7.58E±06 |

| **RR Indicator** | | | |
|---|---|---|---|
| Rebound at 60°C (%) | 57.0 | 58.4 | 58.7 |
| ARES TD at 30°C | 0.172 | 0.166 | 0.157 |

| | | | |
|---|---|---|---|
| ¹Polybutadiene, Ni catalyzed, obtained as BUD1208 from The Goodyear Rubber and Tire Company ²Polybutadiene, Ni catalyzed, branched, obtained as BUD4001 from The Goodyear Rubber and Tire Company ³Solution polymerized styrene butadiene rubber, 21% Styrene, functionalized, obtained as SPRINTAN SLR 4602 from Synthos. ⁴Bio-based, bi-functional organo-silane obtained as Si-266 from Evonik. | | | |

Table 1 displays similar properties between Experimental Sample B and Control A when the petroleum-derived rubber processing oil is replaced with a bio-derived oil. An increase in the bio-derived coupling agent is made between Experimental Sample C and Experimental Sample B to further adjust for the change. This improved the delta torque value of Sample C, which is a better match to Control A.

Altogether, the Experimental Samples displayed similar or slightly improved performance indicators. Experimental Sample C resulted in improved rolling resistance (higher is better at 60° C); substantially improved wear (lower DIN abrasion is better); and substantially improved winter performance (lower G' -20° C is better). There was some tradeoff observed to wet grip (higher Tan D at 0° C is better).

It is concluded that compound performance is not negatively impacted when a sustainably sourced rubber process oil is used in place of a petroleum-based oil and a higher level of bio-derived coupling agent.

### EXAMPLE 2

Experimental Sample D is shown in Table 2. In Sample D, the conventional petroleum-derived carbon black is replaced with a bio-derived carbon black. Sample D contains a greater amount of carbon black over Experimental Sample B, with all other amounts being the same.

The rubber compounds were then cured and tested for various properties including, inter alia, wear, wet traction, and rolling resistance, etc.

The basic formulations are shown in the following Table 2, which is presented in parts per 100 parts by weight of elastomer (phr). Table 2 also compares the cured properties of Control Sample A and Experimental Sample D.

**TABLE 2**

| | **Samples Control** | **Experimental** | |
|---|---|---|---|
| | **A** | **B** | **D** |
| Carbon black (petroleum based) | 4.16 | 4.16 | 0 |
| Carbon black (bio-based)¹ | 0 | 0 | 8 |
| **Viscosity,** RPA at 0.83 Hz, 100°C | | | |
| G', 15% (MPa) | 0.208 | 0.208 | 0.215 |
| **Cure State** | | | |
| Delta Torque (dNm) | 18.4 | 19.1 | 18.3 |
| T25 (min) | 9.2 | 8.1 | 7.5 |
| T90 (min) | 21.0 | 17.5 | 16.4 |
| **Stiffness** | | | |
| RPA G', 1% (MPa) | 2.487 | 2.571 | 2.288 |
| RPA G' 50% (MPa) | 1.148 | 1.195 | 1.098 |
| ARES at 30°C, G' (Pa) | 2.62E±06 | 2.68E±06 | 2.45E±06 |
| **Chip/Flake** | | | |
| True Tensile | 109 | 106 | 75 |

| **Wet Indicator** | | | |
|---|---|---|---|
| Rebound at 0°C (%) | 23.2 | 24.0 | 25.8 |
| ARES TD at 0°C | 0.336 | 0.322 | 0.286 |

| **Wear Indicators** | | | |
|---|---|---|---|
| DIN Abrasion (relative volume loss) | 93 | 91 | 91 |
| Grosch Abrasion High Severity (mg/km) | 619 | 594 | 668 |

| **Snow Indicator** | | | |
|---|---|---|---|
| ARES G' at -20°C (Pa) | 9.64E±06 | 8.73E±06 | 7.06E±06 |

| **RR Indicator** | | | |
|---|---|---|---|
| Rebound at 60°C (%) | 57.0 | 58.4 | 58.7 |
| ARES TD at 30°C | 0.172 | 0.166 | 0.151 |

| | | | |
|---|---|---|---|
| ¹ Carbon black derived from CO₂ feedstock | | | |

Table 2 displays a reduction in low strain stiffness and true tensile (due to a reduction in tensile strength) between Experimental Sample D and Control A when the conventional petroleum-derived carbon black is replaced with a bio-derived carbon black.

Altogether, the bio-derived carbon black was shown to have a negative impact on wet indicator (higher DIN is better), but an improved impact in snow (lower G' -20°C is better) and rolling resistance (higher rebound at 60°C is better) indicators. It is concluded that the bio-derived carbon black can be used as a colorant without significantly impacting compound performance.

### EXAMPLE 3

Experimental Samples E-G are shown in Table 3. Sample E replaced a portion of the soybean oil in the formula of Experimental Sample B with equal parts of a bio-derived plasticizer/traction resin, more particularly a terpene resin. Sample F added two parts per weight of terpene resin to the formula of Experimental Sample B. In Sample G, the conventional petroleum-derived carbon black of Sample F is further replaced with a bio-derived carbon black. Sample G also contains a twenty-five percent (25%) increase in silane coupler over Control Sample B. Generally, Sample G incorporates the soybean oil content of Sample B; the increased coupler content of Sample C; and the added resin content of Sample F, with all other ingredient amounts remaining the same.

The rubber compounds were then cured and tested for various properties including, inter alia, wear, wet traction, and rolling resistance, etc.

The basic formulations are shown in the following Table 3, which is presented in parts per 100 parts by weight of elastomer (phr). Table 3 also compares the cured properties of Control Sample A and Experimental Samples B.

**TABLE 3**

| | **Samples** | | | | |
|---|---|---|---|---|---|
| | **Control** | **Experimental** | | | |
| | **A** | **B** | **E** | **F** | **G** |
| Naphthenic Oil | 17 | 0 | 0 | 0 | 0 |
| Soybean Oil | 0 | 17 | 15 | 17 | 15 |
| Coupler | 5.2 | 5.2 | 5.2 | 5.2 | 6.5 |
| Carbon Black (petroleum based) | 4.16 | 4.16 | 4.16 | 4.16 | 0 |
| Carbon Black (bio-based) | 0 | 0 | 0 | 0 | 8 |
| Resin¹ | 0 | 0 | 2 | 2 | 2 |
| **Viscosity,** RPA at 100°C | | | | | |
| G', 15% (MPa) | 0.208 | 0.208 | 0.210 | 0.194 | 0.208 |

| **Cure State** | | | | | |
|---|---|---|---|---|---|
| Delta Torque (dNm) | 18.4 | 19.1 | 17.6 | 19.5 | 19.3 |
| T25 (min) | 9.2 | 8.1 | 7.5 | 4.8 | 5.4 |
| T90 (min) | 21.0 | 17.5 | 15.6 | 14.6 | 14.6 |

| **Stiffness** | | | | | |
|---|---|---|---|---|---|
| RPA G', 1% (MPa) | 2.487 | 2.571 | 2.547 | 2.373 | 2.291 |
| RPA G' 50% (MPa) | 1.148 | 1.195 | 1.142 | 1.095 | 1.07 |
| ARES at 30°C, G' (Pa) | 2.62E±06 | 2.68E±06 | 2.65E±06 | 2.27E±06 | 2.61E±06 |

| **Chip/Flake** | | | | | |
|---|---|---|---|---|---|
| | **Samples** | | | | |
| | **Control** | **Experimental** | | | |
| | **A** | **B** | **E** | **F** | **G** |
| True Tensile | 109 | 106 | 112 | 115 | 86 |

| **Wet Indicator** | | | | | |
|---|---|---|---|---|---|
| Rebound at 0°C (%) | 23.2 | 24.0 | 23.4 | 24.1 | 24.1 |
| ARES TD at 0°C | 0.336 | 0.322 | 0.318 | 0.301 | 0.308 |

| **Wear Indicators** | | | | | |
|---|---|---|---|---|---|
| DIN Abrasion (relative volume loss) | 93 | 91 | 84 | 77 | 85 |
| Grosch Abrasion High Severity (mg/km) | 619 | 594 | 582 | 584 | 617 |

| **Snow Indicator** | | | | | |
|---|---|---|---|---|---|
| ARES G' at -20°C (Pa) | 9.64E±06 | 8.73E±06 | 8.74E±06 | 6.96E±06 | 8.46E±06 |

| **RR Indicator** | | | | | |
|---|---|---|---|---|---|
| Rebound at 60°C (%) | 57.0 | 58.4 | 57.7 | 58.0 | 59.6 |
| ARES TD at 30°C | 0.172 | 0.166 | 0.169 | 0.160 | 0.159 |

| | | | | | |
|---|---|---|---|---|---|
| ¹Alpha pinene resin obtained as SYI,VATRAXX 8155 from Kraton Chemical. | | | | | |

In Example 3, the rubber polymer blend was adjusted to evaluate the impact of the bio-derived resin as a partial replacement of and/or additional plasticizer on predicted performance.

As displayed in Samples F and G, increasing the total plasticizer level (by adding 2 phr of bio-derived resin) resulted in a reduction of compound stiffness, which then improved the snow/winter indicator. Similar compound properties were observed for wet performance, rolling resistance, and treadwear. The combination of the sustainable materials resulted in a compound with lower compound stiffness, a reduction in true tensile, and improved rolling resistance indicators. It also demanded no tradeoff in wet performance indicator, treadwear or snow indicators, that is, the indicators were similar to those of the control.

It is concluded that performance characteristics can be controllably impacted, and the percent of renewable/sustainable content can be adjusted, by using bio-derived plasticizers in a composition containing a majority SSBR and minority BR(s) blend.

It is concluded that a tread tire rubber composition formed having a majority percent of renewable content from a combination of different renewable materials can meet or improve the performance of a tire formed from a conventional rubber composition.

## Claims

1. A tire component formed from or comprising a rubber composition comprising a majority weight percent of renewable materials, the rubber composition comprising, based on 100 parts per weight (phr) of elastomer:
a blend of at least two different rubber elastomers, greater than 50 phr of at least one of said least two rubber elastomers being a mass balanced polymer;
at least one bio-derived plasticizer; and
a bio-derived filler system comprising silica and carbon black, wherein said carbon black filler is at least partially derived from a bio-based feedstock prior to its addition to the rubber composition.

2. The tire component of claim 1, wherein the rubber composition comprises greater than 75% or greater than 85% of renewable material.

3. The tire component of claim 1 or 2, wherein the bio-derived plasticizer comprises a vegetable triglyceride rubber processing oil and/or a bio-based terpene resin such as alpha pinene resin.

4. The tire component of at least one of the previous claims, wherein the rubber composition is free of a petroleum-derived resin, free of a petroleum-derived oil and free of a petroleum-derived filler material.

5. The tire component of at least one of the previous claims, wherein the blend of rubber elastomers comprises a majority of at least one SBR and comprises at least one polybutadiene.

6. The tire component of claim 5, further comprising at least a second polybutadiene, the first and second polybutadienes having the same glass transition temperatures (Tgs) or glass transition temperatures that are not more than 3°C different, and/or having the same cis contents or cis-contents that are not more than 3 percent different.

7. The tire component of claim 6, wherein the second polybutadiene is branched, wherein the branched polybutadiene makes up a minority content of the at least two polybutadienes.

8. The tire component of claim 5, 6 or 7, wherein the SBR is a solution polymerized SBR that is preferably functionalized.

9. The tire component of at least one of the previous claims, wherein the blend of rubber elastomers comprises from 50 to 75 phr of a functionalized SSBR.

10. The tire component of at least one of the previous claims, wherein the blend of rubber elastomers comprises from 25 phr to 50 phr of at least one polybutadiene.

11. The tire component of at least one of the previous claims, further comprising a lignin-based antioxidant.

12. The tire component of at least one of the previous claims, further comprising the filler system in an amount of from 75 to 100 phr.

13. The tire component of claim 12, wherein the filler system comprises from 50 phr to 75 phr of silica, preferably silica derived from rice husk ash; from 1 to 15 phr of carbon black; and from 5 to 15 phr of a bio-derived coupling agent.

14. The tire component of at least one of the previous claims, further comprising less than 50 phr of a bio-derived plasticizing resin.

15. The tire component of at least one of the previous claims, wherein, prior to its addition to the rubber composition, the carbon black used therein is a carbon black produced from a feedstock that excludes fossil carbon.
